(19)

Europäisches Patentamt
European Patent Office
Office européen des brevets

(11) **EP 2 416 583 A1**

(12) **EUROPEAN PATENT APPLICATION**
published in accordance with Art. 153(4) EPC

(43) Date of publication:
**08.02.2012 Bulletin 2012/06**

(51) Int Cl.:
*H04N 13/04* (2006.01)     *G06T 1/00* (2006.01)
*H04N 7/26* (2006.01)

(21) Application number: **10761322.6**

(22) Date of filing: **12.03.2010**

(86) International application number:
**PCT/JP2010/001798**

(87) International publication number:
**WO 2010/116614 (14.10.2010 Gazette 2010/41)**

(84) Designated Contracting States:
**AT BE BG CH CY CZ DE DK EE ES FI FR GB GR HR HU IE IS IT LI LT LU LV MC MK MT NL NO PL PT RO SE SI SK SM TR**

(30) Priority: **30.03.2009 JP 2009081969**

(71) Applicants:
• **NEC Corporation**
  **Tokyo 108-8001 (JP)**
• **NLT Technologies, Ltd.**
  **Nakahara-ku**
  **Kawasaki-shi**
  **Kanagawa 211-8666 (JP)**

(72) Inventors:
• **KIMOTO, Takahiro**
  **Tokyo 108-8001 (JP)**
• **UEHARA, Shinichi**
  **Kawasaki**
  **Kanagawa 211-8666 (JP)**
• **GO, Ogi**
  **Kawasaki**
  **Kanagawa 211-8666 (JP)**
• **SAKAMOTO, Michiaki**
  **Kawasaki**
  **Kanagawa 211-8666 (JP)**

(74) Representative: **Vossius & Partner**
  **Siebertstrasse 4**
  **81675 München (DE)**

(54) **IMAGE DISPLAY DEVICE, IMAGE GENERATION DEVICE, IMAGE DISPLAY METHOD, IMAGE GENERATION METHOD, AND NON-TRANSITORY COMPUTER-READABLE MEDIUM IN WHICH PROGRAM IS STORED**

(57)     An image display apparatus according to one aspect of the present invention that is capable of providing an image display apparatus is able to efficiently achieve 2D/3D mixed representation while suppressing data transmission amount. The image display apparatus refers to shape information 1002 and an area of interest image signal 1001 to change an area of interest in an image signal 1000 of a first viewpoint to an image signal of a second viewpoint which is a viewpoint different from the first viewpoint, to achieve 3D image display using the image signal of the second viewpoint that is obtained and the image signal 1000 of the first viewpoint.

Fig. 1

EP 2 416 583 A1

## Description

## Technical Field

The present invention relates to an image display technique to achieve three-dimensional (3D) representation, and more particularly, to an image display technique in which two-dimensional (2D) representation and 3D representation are mixed in one image.

## Background Art

More attention has been directed to 3D images along with a recent advancement of image display technologies since 3D images have higher image representation ability than 2D image. A 3D representation uses a phenomenon that human beings recognize space as three dimensions by parallax between right eyes and left eyes.

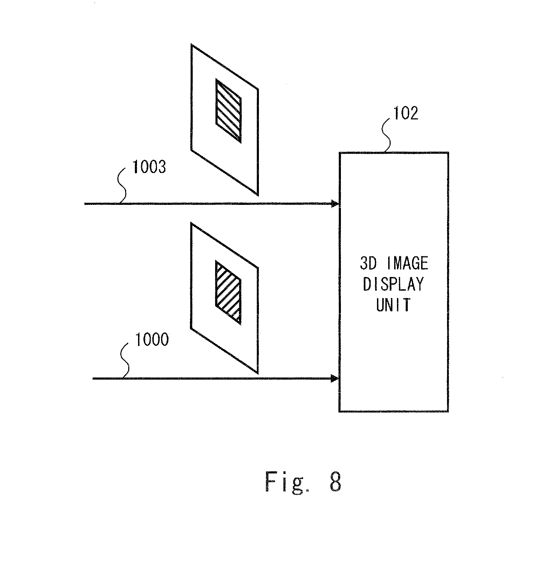

Fig. 8 is a block diagram showing a configuration of an image display apparatus that achieves 3D representation. A 3D image display unit 102 adjusts an image signal 1000 corresponding to an input to one eye and a parallax image signal 1003 corresponding to an input to the other eye in consideration of parallax so that these signals are input to right and left separate eyes, thereby achieving artificial 3D representation.

Patent literature 1 discloses a stereoscopic image processing apparatus in which the highest steric effect appears at a region around a point of regard. In Patent literature 1, a point of regard parallax detecting unit obtains a difference between an average parallax amount around the point of regard and a parallax amount in the whole area. The average parallax amount is obtained from parallax information which is a difference between a left eye image and a right eye image. A filter coefficient generator calculates a filter coefficient for each area based on this difference.

Filtering processing is performed on a stereoscopic image on which a left eye image signal and a right eye image signal generate using the left eye image signal and the parallax information using the filter coefficient calculated by the filter coefficient generator, thereby controlling an image in which an object and a depth are deviated in the point of regard to a blurred state.

## Citation List

## Patent Literature

    Patent literature 1
    Japanese Unexamined Patent Application Publication No. 11-155154

## Summary of Invention

## Technical Problem

A decrease in the amount of image data that is to be transmitted is required in the 3D representation. When the image display apparatus receives an image signal through a transmission path for achieving 3D representation, an image signal corresponding to each viewpoint needs to be transmitted. Further, in Patent literature 1, the left eye image signal and the parallax information to generate the right eye image signal are transmitted. Thus, the data amount increases in the 3D image data than in the 2D image data.

Furthermore, a decrease in power consumption in a display is required in the 3D representation. A display that displays an image of a plurality of viewpoints with the light amount equal to that of an image of a single viewpoint consumes higher electric power. One method to achieve high representation ability while suppressing the data transmission amount and the power consumption includes 2D/3D mixed representation in which only an area of interest in one image is sterically represented.

The present invention has been made in view of these circumstances. The present invention aims to provide an image display apparatus, an image generation apparatus, an image display method, an image generation method, and a non-transitory computer readable medium storing a program that are capable of efficiently achieving 2D/3D mixed representation having high representation ability while suppressing data transmission amount.

## Solution to Problem

An image display apparatus according to a first exemplary aspect of the present invention includes: means for combining a first image signal that receives and a second image signal to obtain a third image signal, the second image signal being an image signal in an area of interest of the first image signal and having parallax; and means for performing stereoscopic display using the third image signal and the first image signal.

An image display apparatus according to a second exemplary aspect of the present invention includes: a parallax image generator for receiving an image signal of a first viewpoint, an area of interest image signal, and area of interest shape information, the area of interest image signal being an image signal in the area of interest, changing the area of interest in the image signal of the first viewpoint to an area of interest parallax image signal which is an image of a different viewpoint, to generate an image signal of a second viewpoint; and a three-dimensional image display unit for performing three-dimensional image display using the image signal of the first viewpoint and the image signal of the second viewpoint.

An image generation apparatus according to a third exemplary aspect of the present invention generates: an image signal of a first viewpoint; an area of interest image signal which is an image signal in the area of interest; and area of interest shape information.

An image display method according to a fourth exemplary aspect of the present invention includes: combining a first image signal that receives and a second image signal to generate a third image signal, the second image signal being an image signal in an area of interest of the first image signal and having parallax; and performing stereoscopic display using the third image signal and the first image signal.

An image display method according to a fifth exemplary aspect of the present invention includes: receiving an image signal of a first viewpoint, an area of interest image signal, and area of interest shape information, the area of interest image signal being an image signal in the area of interest, changing the area of interest in the image signal of the first viewpoint to an area of interest parallax image signal which is an image of a different viewpoint, to generate an image signal of a second viewpoint; and performing three-dimensional image display using the image signal of the first viewpoint and the image signal of the second viewpoint.

An image generation method according to a sixth exemplary aspect of the present invention generates: an image signal of a first viewpoint; an area of interest image signal which is an image signal in the area of interest; and area of interest shape information indicating a position and/or a shape of the area of interest.

A non-transitory computer readable medium storing a program of an image display apparatus according to a seventh aspect of the present invention causes a computer to execute processing of: combining a first image signal that receives and a second image signal to generate a third image signal, the second image signal being an image signal in an area of interest of the first image signal and having parallax; and performing stereoscopic display using the third image signal and the first image signal.

A non-transitory computer readable medium storing a program of an image display apparatus according to an eighth aspect of the present invention causes a computer to execute processing of: receiving an image signal of a first viewpoint, an area of interest image signal, and area of interest shape information, the area of interest image signal being an image signal in the area of interest, the area of interest shape information indicating a position and/or a shape of the area of interest, changing the area of interest in the image signal of the first viewpoint to an area of interest parallax image signal which is an image of a different viewpoint, to generate an image signal of a second viewpoint; and executing three-dimensional image display using the image signal of the first viewpoint and the image signal of the second viewpoint.

A non-transitory computer readable medium storing a program of an image generation apparatus according to a ninth aspect of the present invention causes a computer to execute processing of generating: an image signal of a first viewpoint; an area of interest image signal which is an image signal in the area of interest; and area of interest shape information indicating a position and/or a shape of the area of interest.

## Advantageous Effects of Invention

According to the present invention, it is possible to provide an image display apparatus, an image generation apparatus, an image display method, an image generation method, and a non-transitory computer readable medium storing a program that are capable of efficiently achieving 2D/3D mixed representation with high image representation ability while suppressing data transmission amount.

## Brief Description of Drawings

Fig. 1 is a block diagram showing a configuration of an image display apparatus according to a first exemplary embodiment;
Fig. 2 is a block diagram showing one example of a configuration of a parallax image generator in the image display apparatus according to the first exemplary embodiment;

Fig. 3 is a block diagram showing another example of the configuration of the parallax image generator in the image display apparatus according to the first exemplary embodiment;

Fig. 4 is a block diagram showing a configuration of an image display apparatus according to a second exemplary embodiment;

Fig. 5 is a block diagram showing a configuration of an image display apparatus according to a third exemplary embodiment;

Fig. 6 is a block diagram showing a configuration of an image display apparatus according to a fourth exemplary embodiment;

Fig. 7 is a block diagram showing one example of a configuration of a parallax image generator in the image display apparatus according to the fourth exemplary embodiment; and

Fig. 8 is a block diagram showing a configuration of an image display apparatus that achieves 3D representation.

**Description of Embodiments**

First exemplary embodiment

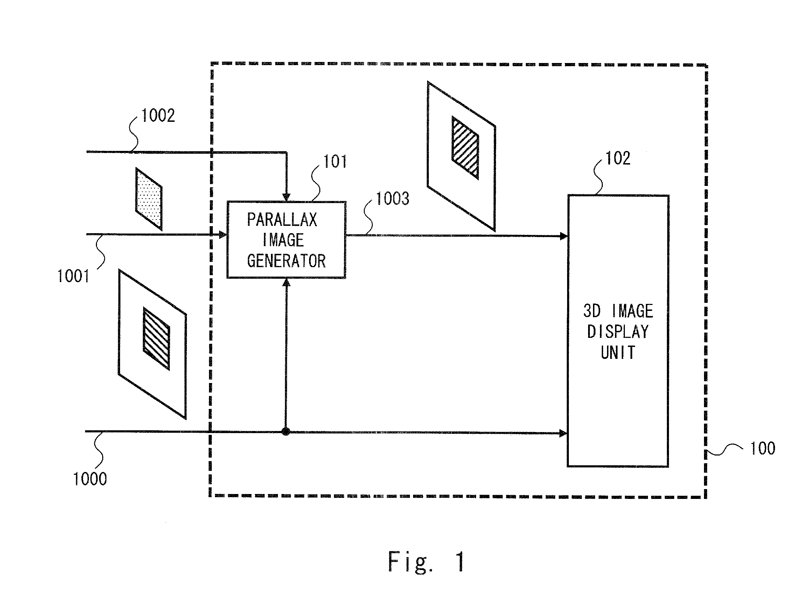

Referring to Fig. 1, a configuration of an image display apparatus according to a first exemplary embodiment of the present invention will be described. Fig. 1 is a block diagram showing a configuration of an image display apparatus 100 according to the first exemplary embodiment. As shown in Fig. 1, the image display apparatus 100 includes a parallax image generator 101, and a 3D image display unit 102. The image display apparatus 100 performs 2D/3D mixed display to sterically represent only an area of interest in an image in order to suppress data transmission amount and power consumption.

The image display apparatus 100 receives an image signal 1000, an area of interest image signal 1001, and area of interest shape information. The image signal 1000 is an image signal of one viewpoint that is displayed in a form of 3D. The area of interest image signal 1001 is a signal to generate an image of the other viewpoint of an area of interest that is displayed in the form of 3D. In the first exemplary embodiment, the area of interest shape information includes shape information 1002 which is a signal indicating a position and/or a shape of the area of interest.

The parallax image generator 101 refers to the image signal 1000, the area of interest image signal 1001, and the shape information 1002 to replace the area of interest of the image signal 1000 by an image from a different viewpoint, to generate a parallax image signal 1003. The 3D image display unit 102 receives the image signal 1000 and the parallax image signal 1003 to display 3D images.

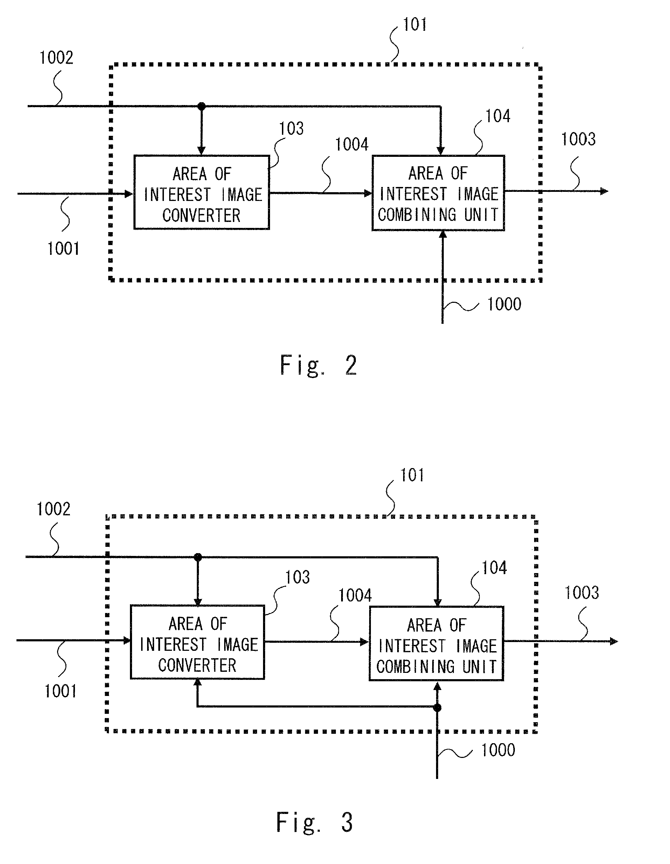

Referring now to Figs. 2 and 3, a configuration example of the parallax image generator 101 will be described. Figs. 2 and 3 are block diagrams each showing a configuration example of the parallax image generator 101. In the example shown in Fig. 2, the parallax image generator 101 includes an area of interest image converter 103 and an area of interest image combining unit 104.

In the example shown in Fig. 2, the area of interest image converter 103 receives the area of interest image signal 1001 and the shape information 1002. The area of interest image converter 103 refers to the shape information 1002 to perform conversion processing on the area of interest image signal 1001, to generate an area of interest parallax image signal 1004. The area of interest parallax image signal 1004 is an image signal obtained by converting an area of interest in the image signal of a first viewpoint to an image of a different viewpoint.

The processing in the parallax image generator 101 shown in Fig. 2 will be described in detail. The parallax image generator 101 shown in Fig. 2 performs geometric conversion as an example of the conversion processing. The geometric conversion is performed to convert the area of interest image signal 1001 into an image from a specific viewpoint. In particular, the geometric conversion is important when the 3D representation is interactively changed according to the changes in situations including a position of a viewer.

The area of interest image converter 103 refers to a geometric information parameter included in the shape information 1002 to achieve geometric conversion that generates an image from a specific viewpoint. Specific examples of the geometric conversion includes affine conversion and transparency conversion. One technique of the geometric conversion includes changing a horizontal position of the area of interest image signal 1001 by the area of interest image converter 103 according to the position of the viewpoints.

The area of interest image combining unit 104 receives the image signal 1000, the shape information 1002, and the area of interest parallax image signal 1004. The area of interest image combining unit 104 refers to the shape information 1002 to combine the area of interest parallax image signal 1004 and the image signal 1000 of the area of interest, to generate the parallax image signal 1003.

In the example shown in Fig. 3, the area of interest image converter 103 receives the image signal 1000 in addition to the area of interest image signal 1001 and the shape information 1002. The area of interest image converter 103 shown in Fig. 3 is different from the example shown in Fig. 2 in that it also refers to the image signal 1000 in addition to the shape information 1002.

The processing in the parallax image generator 101 shown in Fig. 3 will be described in detail. The area of interest image converter 103 calculates the degree of conversion based on signal distribution of the area of interest image signal 1001 and the image signal 1000, performs conversion processing on the area of interest image signal 1001, to generate the area of interest parallax image signal 1004. An example of the conversion processing performed in the area of interest image converter 103 shown in Fig. 3 includes gradation conversion such as luminance and saturation, and filtering in frequency domains.

When performing gradation conversion, the area of interest image converter 103 refers to the area of interest image signal 1001 and the image signal 1000, to calculate the gradation conversion parameter based on the distribution information regarding the gradation of these image signals. The area of interest image converter 103 performs gradation conversion on the area of interest image signal 1001 according to the gradation conversion parameter that is calculated.

Specific examples of the gradation conversion include gradation compensation processing and gradation enhancement processing. The gradation compensation processing is the processing for converting the gradation of the area of interest image signal 1001 so as to produce natural view when it is combined with the image signal 1000 when the gradation of the image signal 1000 and that of the area of interest image signal 1001 are different.

The gradation enhancement processing is the processing for increasing the gradation of the area of interest image signal 1001 to increase the stimulus of the area of interest in order to relieve 3D sickness that is caused due to a physiological phenomenon called vergence accommodation conflict.

In both cases, the area of interest image converter 103 calculates the degree of gradation conversion that does not make the viewer feel uncomfortable based on the distribution information of the gradation of the image signal 1000 and the distribution information of the gradation of the area of interest image signal 1001 to achieve processing. One example of the distribution information of the gradation includes luminance average.

The filtering in the frequency domains is performed to sharpen the area of interest image signal 1001. When performing the filtering in the frequency domains, the area of interest image converter 103 refers to the area of interest image signal 1001 and the image signal 1000 to calculate the filtering processing parameter based on the distribution information of these frequency domains. The area of interest image converter 103 then performs filtering processing according to the filtering processing parameter that is calculated so as to sharpen the image of the area of interest image signal 1001.

A specific example of the filtering processing includes edge enhancement. The area of interest image converter 103 calculates sharpness of the area of interest so as not to make the viewer feel uncomfortable based on the distribution information of the frequency components of the image signal 1000 and the distribution information of the frequency components of the area of interest image signal 1001 to achieve processing. One example of the distribution information of the gradation includes power of high frequency components.

The combining processing performed in the area of interest image combining unit 104 includes logic adding processing to replace the area of interest in the image signal 1000 by the area of interest parallax image signal 1004, and arithmetic adding processing to blend (weighted addition) the image signal 1000 with the area of interest parallax image signal 1004. The arithmetic adding processing further includes a case in which the image signal 1000 and the area of interest parallax image signal 1004 are blended in the same ratio in the area of interest and a case in which the ratio of the image signal 1000 to the area of interest parallax image signal 1004 is changed for each element in the area of interest. The area of interest has a rectangular shape or arbitrary shape.

When the combining processing is the logic adding processing, the shape information 1002 is the coordinate information indicating apices if the area of interest is rectangle. When the area of interest is of arbitrary shape, the shape information 1002 is an image signal having two values indicating whether each of the pixels in the image is included in an area of interest. When the combining processing is the arithmetic adding processing and the blend ratio is constant, the area of interest shape information further includes a blend ratio. When the blend ratio is not constant, the area of interest shape information includes an image signal having multiple values indicating each blend ratio of the pixels in the area of interest.

Although described in the first exemplary embodiment is an example in which the parallax image generator 101 includes the area of interest image converter 103 and the area of interest image combining unit 104, it is not limited to this example. The present invention can be applied also to a case in which the parallax image generator 101 only includes the area of interest image combining unit 104. In such a case, the area of interest image signal 1001 can be regarded as the area of interest parallax image signal 1004 to perform processing.

A case in which the shape information 1002 input to the area of interest image converter 103 and the area of interest image combining unit 104 temporally varies is also included in the range of the present invention. As described above, according to the first exemplary embodiment, an image of the other viewpoint can be generated only for the area of interest, which enables efficient generation of a parallax image.

Second exemplary embodiment

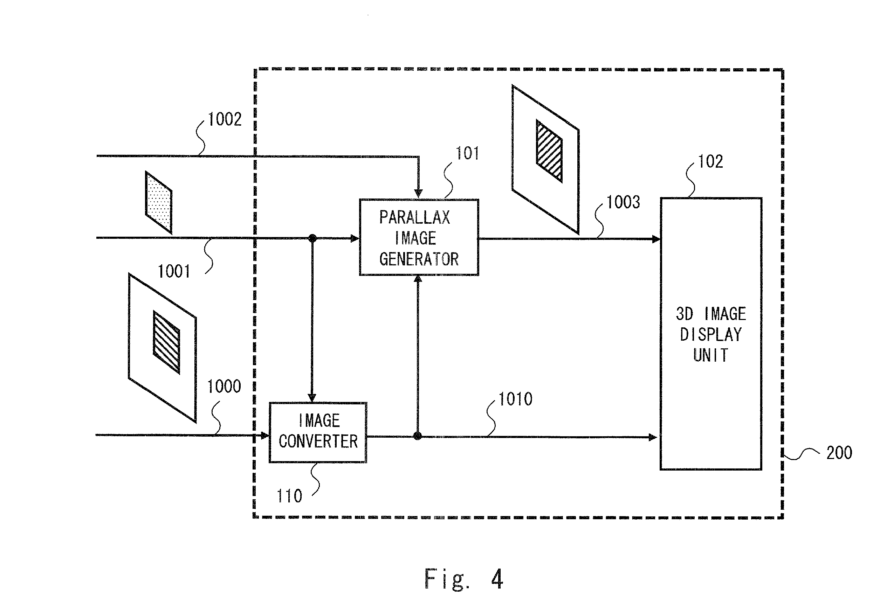

Referring to Fig. 4, a configuration of an image display apparatus according to a second exemplary embodiment of the present invention will be described. Fig. 4 is a block diagram showing a configuration of an image display apparatus 200 according to the second exemplary embodiment. In Fig. 4, the same components as shown in Fig. 1 are denoted by the same reference symbols, and the description of which will be omitted as appropriate.

As shown in Fig. 4, the image display apparatus 200 includes an image converter 110 in addition to a parallax image generator 101 and a 3D image display unit 102. As is similar to the first exemplary embodiment, the image display apparatus 200 performs 2D/3D mixed display to sterically represent only an area of interest of an image in order to suppress data transmission amount and power consumption.

The image converter 110 receives an image signal 1000 and an area of interest image signal 1001. The image converter 110 refers to the area of interest image signal 1001 to perform conversion processing to reduce visibility of the image signal 1000, to generate an image signal 1010. In the following processing, the image signal 1010 is regarded as the image signal 1000 shown in Fig. 1, and the same processing as in the first exemplary embodiment is performed.

The conversion processing in the image converter 110 includes gradation conversion, filtering in frequency domains and the like. The gradation conversion decreases the gradation outside the area of interest so as to achieve relative enhancement of the area of interest or to reduce power consumption in the 3D image display unit 102. When performing the gradation conversion, the image converter 110 refers to the area of interest image signal 1001 and to the image signal 1000 to calculate the gradation conversion parameter based on the distribution information regarding the gradation of these image signals. The image converter 110 then performs processing to reduce the gradation of the image signal 100 according to the gradation conversion parameter that is calculated.

More specifically, the image converter 110 calculates the degree of gradation reduction in consideration of both of the natural image for viewers and the degree of reduction in power consumption based on the distribution information of the gradation of both of the image signal 1000 and the area of interest image signal 1001, to perform gradation conversion.

The filtering of the frequency domains includes processing of decreasing sharpness outside the area of interest such as feathering processing to achieve relative enhancement of the area of interest. When performing the filtering processing, the image converter 110 refers to the area of interest image signal 1001 and the image signal 1000 to calculate the filtering processing parameter based on the distribution information of the frequency domains of these image signals. The image converter 110 then performs filtering processing to decrease sharpness of the image of the image signal 1000 according to the filtering processing parameter that is calculated.

Specifically, the image converter 110 determines sharpness outside the area of interest so as not to make the viewer feel uncomfortable based on the distribution information of the frequency components of the image signal 1000 and the area of interest image signal 1001 to perform processing.

Although the image converter 110 refers to the area of interest image signal 1001 to perform conversion processing in the exemplary embodiment shown in Fig. 4, the present invention can be applied to cases in which the image converter 110 refers to both of the area of interest image signal 1001 and the shape information 1002, or only to the shape information 1002.

When the image converter 110 refers to both of the area of interest image signal 1001 and the shape information 1002, the image converter 110 refers to the shape information 1002 to perform conversion processing only on the signal outside the area of interest of the image signal 1000.

When the image converter 110 refers only to the shape information 1002, the image converter 110 determines the degree of conversion by referring to the signal distribution of the whole image signal 1000 and the signal distribution in the area of interest of the image signal 1000 to achieve the processing.

As stated above, according to the second exemplary embodiment, the image converter 110 can perform conversion processing on a signal outside the area of interest. This achieves 2D/3D mixed display for the area of intent having high representation ability.

Third exemplary embodiment

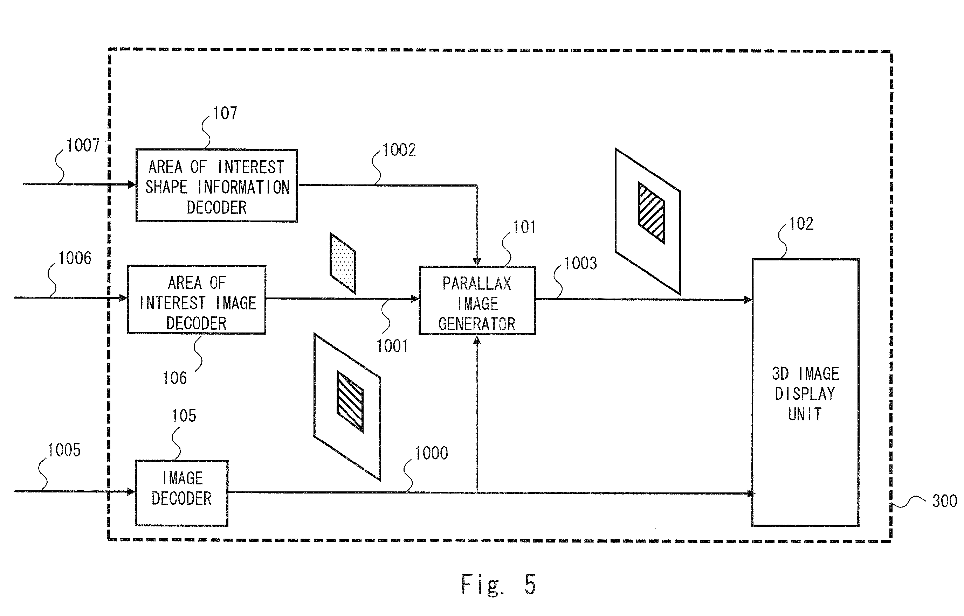

Referring to Fig. 5, a configuration of an image display apparatus according to a third exemplary embodiment of the present invention will be described. Fig. 5 is a block diagram showing a configuration of an image display apparatus 300 according to the third exemplary embodiment. In Fig. 5, the same components as shown in Fig. 1 are denoted by the same reference symbols, and the description of which will be omitted as appropriate.

As shown in Fig. 5, the image display apparatus 300 includes an image decoder 105, an area of interest image decoder 106, and an area of interest shape information decoder 107 in addition to a parallax image generator 101 and a 3D image display unit 102. As is similar to the above exemplary embodiments, the image display apparatus 300 performs 2D/3D mixed display to sterically represent only an area of interest of an image in order to suppress data transmission amount and power consumption.

The image decoder 105 decodes first coded data 1005 to generate an image signal 1000, decodes second coded data 1006 to generate an area of interest image signal 1001, and decodes third coded data 1007 to generate shape information 1002. After decoding each coded data, the same processing can be performed as the one that is described in the first exemplary embodiment.

The third exemplary embodiment is effective also when the image display apparatus shown in Fig. 5 includes the image converter 110 shown in Fig. 4. In this case, the image converter 110 performs conversion processing on the image signal 1000 decoded by the image decoder 105. The thus-obtained image signal 1010 may be regarded as the image signal 1000 in Fig. 5, to perform the similar processing as in the second exemplary embodiment.

When one image of images of two viewpoints achieving 3D representation is transmitted in the form of the difference of the other image, "0" is coded for all the parts other than the area of interest. In the third exemplary embodiment, the image of the other viewpoint is coded only for the area of interest, thereby efficiently performing the coding. The present invention is particularly effective when the area of interest is of arbitrary shape, when an image of one viewpoint is given transmittance and an image of the other viewpoint is overlapped with the image of one viewpoint for display, or when 3D representation is changed according to the viewing situation.

Although the image display apparatus which is a receiving side has been described in the third exemplary embodiment, the present invention may be applied to an image generation apparatus that outputs data to the image display apparatus of the present invention. When the image display apparatus has the configuration shown in Fig. 1, the image generation apparatus outputs the image signal 1000, the area of interest image signal 1001, and the shape information 1002.

When the image display apparatus is the exemplary embodiment shown in Fig. 5, the image generation apparatus outputs the coded data 1005 of the image signal 1000, the coded data 1006 of the area of interest image signal 1001, and the coded data 1007 of the shape information 1002. Specifically, the image generation apparatus in this case includes an image coding unit that codes the image signal 1000 to generate the first coded data, an area of interest image coding unit that codes the area of interest image signal 1001 to generate the second coded data, and an area of interest shape information coding unit that codes the shape information 1002 to generate the third coded data.

Fourth exemplary embodiment

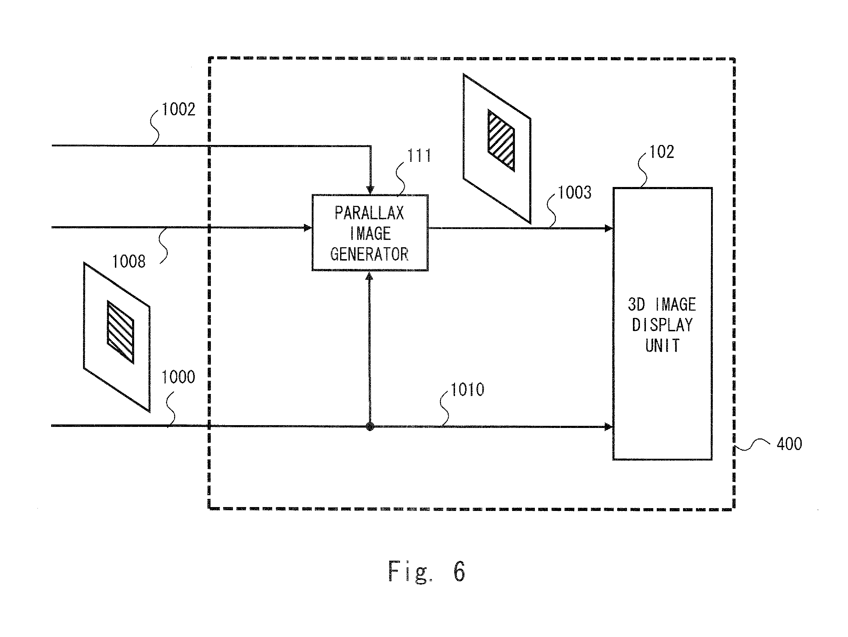

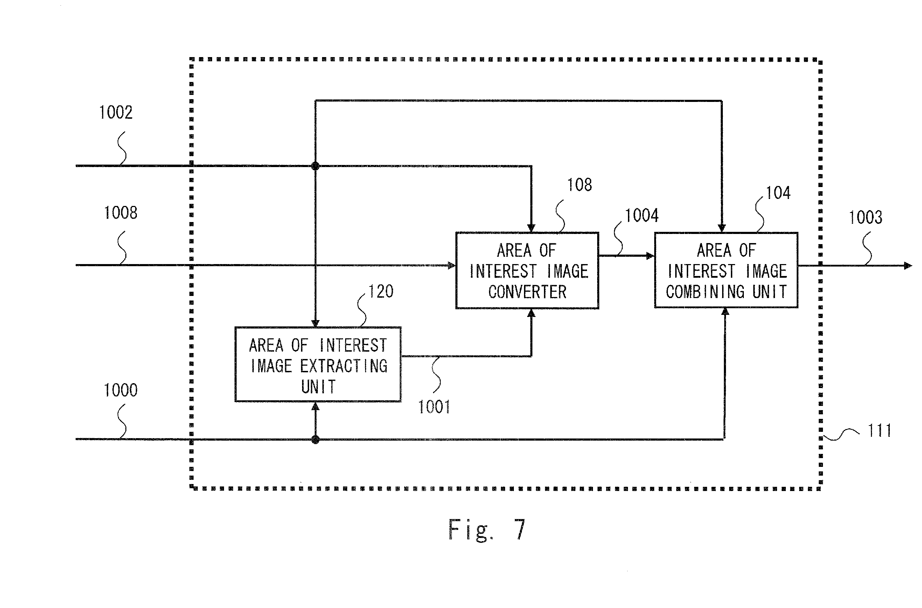

Referring to Figs. 6 and 7, a configuration of an image display apparatus according to a fourth exemplary embodiment of the present invention will be described. Fig. 6 is a block diagram showing a configuration of an image display apparatus 400 according to the fourth exemplary embodiment. In Fig. 6, the same components as shown in Fig. 1 are denoted by the same reference symbols, and the description of which will be omitted as appropriate. In the fourth exemplary embodiment, area of interest shape information includes shape information 1002 which is a signal indicating a position and/or a shape of an area of interest, and a depth image signal 1008 which is a signal indicating a distance between an object in an image and a viewpoint in a three-dimensional space.

The image display apparatus 400 includes a parallax image generator 111 and a 3D image display unit 102. The image display apparatus 400 receives an image signal 1000, the depth image signal 1008, and the shape information 1002. Compared to the first exemplary embodiment, the image apparatus 400 according to the fourth exemplary embodiment does not receive an area of interest image signal 1001. The fourth exemplary embodiment is also different from the first exemplary embodiment in that the depth image signal 1008 as the area of interest shape information is input. As is similar to the first and second exemplary embodiments, the image apparatus 400 according to the third exemplary embodiment performs 2D/3D mixed display to sterically display only the area of interest in an image.

Now, the depth image signal 1008 will be described. The depth image signal 1008 is a signal indicating a distance between an object in an image and a viewpoint in a three-dimensional space. The distance from the viewpoint to the object can be expressed by eight bits for one pixel of the depth image signal 1008. In the fourth exemplary embodiment, the depth image signal 1008 is described as the one indicating the depth corresponding to the image signal 1000.

The image display apparatus 400 according to the fourth exemplary embodiment refers to the shape information 1002 to extract the area of interest image signal 1001 from the image signal 1000. The image display apparatus 400 refers to the shape information 1002 and the depth image signal 1008 to convert the area of interest image signal 1001 to an area of interest parallax image signal 1004, to generate a parallax image signal 1003.

Next, the parallax image generator 111 according to the fourth exemplary embodiment will be described. Fig. 7 is a diagram showing the parallax image generator 111 according to the fourth exemplary embodiment. The parallax image generator 111 includes an area of interest image extracting unit 120, an area of interest image converter 108, and an area of interest image combining unit 104.

The area of interest image extracting unit 120 receives the image signal 1000 and the shape information 1002. The area of interest image extracting unit 120 refers to the shape information 1002 to retrieve the area of interest image signal 1001 from the image signal 1000, to output the area of interest image signal 1001.

The area of interest image converter 108 generates the area of interest parallax image signal 1004 based on the the shape information 1002, the depth image signal 1008, and the area of interest image signal 1001 output from the area of interest image extracting unit 120.

The area of interest image combining unit 104 generate the parallax image signal 1003 based on the image signal 1000, the shape information 1002, and the area of interest parallax image signal 1004, and outputs the parallax image signal 1003 to the 3D image display unit 102.

Description will now be made of the area of interest image converter 108. The area of interest image converter 108 refers to the area of interest shape information 1002 and the depth signal 1008, to convert the area of interest image signal 1001 output from the area of interest image extracting unit 120 into the area of interest parallax image signal 1004.

The area of interest image converter 108 performs shifting processing on each pixel of the area of interest image signal 1001 based on the parallax amount obtained from the depth signal 1008. A shifting amount Δu(u, v) of a pixel (u, v) in the area of interest image signal 1001 is given by formula (I).

$$u(u, v) = \frac{IOD}{z(u,v)} \cdot \frac{1}{\tan(Fov/2)} \quad \cdots (1)$$

In the formula (1), z(u, v) denotes a distance between a viewpoint and a point in the three-dimensional space corresponding to the pixel (u, v) in the area of interest image signal 1001, and can be calculated from the depth image signal 1008. Note that IOD is a distance between different viewpoints, and Fov denotes a viewing angle.

The area of interest image converter 108 puts the pixel value of (u, v) of the area of interest image signal 1001 into the coordinates (u+Δu, v) of the area of interest parallax image signal using the shifting amount that is calculated. In this way, the area of interest parallax image signal 1004 is generated.

In the fourth exemplary embodiment, the area of interest image signal 1001 is generated from the image signal 1000 by referring to the shape information 1002. Then, the area of interest parallax image signal 1004 is generated from the area of interest image signal 1001 by referring to the shape information 1002 and the depth image signal 1008. Further, the parallax image signal 1003 is generated from the image signal 1000 and the area of interest parallax image signal 1004 by referring to the shape information 1002. The 2D/3D mixed display that sterically represents only the area of interest in the image is achieved using the image signal 1000 and the parallax image signal 1003. According to the fourth exemplary embodiment, it is possible to display an image having appropriate parallax for viewpoints of viewers by referring to the depth image signal.

When the image display apparatus is the exemplary embodiment shown in Fig. 6, the image generation apparatus outputs the image signal 1000, the shape information 1002, and the depth image signal 1008. Specifically, the image generation apparatus in this case includes an image signal output unit that outputs the image signal 1000 an area of interest shape information output unit that outputs the shape information 1002, and a depth image output signal output unit that outputs the depth image signal 1008.

Although the area of interest image signal 1001 is generated by the image signal 1000 and the shape information 1002 in the fourth exemplary embodiment, this can be applied also to the first to third exemplary embodiments.

Although the present invention has been described as the configuration of hardware in the above exemplary embodiments, the present invention is not limited to it. The present invention can achieve any processing by causing a Central Processing Unit (CPU) to execute a computer program.

The program can be stored and provided to a computer using any type of non-transitory computer readable media. Non-transitory computer readable media include any type of tangible storage media. Examples of non-transitory computer readable media include magnetic storage media (such as flexible disks, magnetic tapes, hard disk drives, etc.), optical magnetic storage media (e.g. magneto-optical disks), CD-ROM (Read Only Memory), CD-R, CD-R/W, and semiconductor memories (such as mask ROM, PROM (programmable ROM), EPROM (Erasable PROM), flash ROM, RAM (random access memory), etc.). The program may be provided to a computer using any type of transitory computer readable media. Examples of transitory computer readable media include electric signals, optical signals, and electromagnetic waves. Transitory computer readable media can provide the program to a computer via a wired communication line (e.g. electric wires, and optical fibers) or a wireless communication line.

**Industrial Applicability**

The present invention is applicable to an image receiving terminal including a display that can perform 3D representation, or an image transmission system that transmits an image to the image receiving terminal. Note that the present invention is not limited to the exemplary embodiments described above, but can be changed as appropriate without departing from the spirit of the present invention.

While the present invention has been described with reference to the exemplary embodiments, the present invention is not limited by the exemplary embodiments described above. The configurations and the details of the present invention may be variously changed in such a way that can be understood by a person skilled in the art within the scope of the present invention.

This application claims the benefit of priority, and incorporates herein by reference in its entirety, the following Japanese Patent Application No. 2009-081969 filed on March 30, 2009.

**Reference Signs List**

100      IMAGE DISPLAY APPARATUS

101      PARALLAX IMAGE GENERATOR

102      3D IMAGE DISPLAY UNIT

103      AREA OF INTEREST IMAGE CONVERTER

104      AREA OF INTEREST IMAGE COMBINING UNIT

105      IMAGE DECODER

106      AREA OF INTEREST IMAGE DECODER

107      AREA OF INTEREST SHAPE DECODER

108      AREA OF INTEREST IMAGE CONVERTER

110      IMAGE CONVERTER

111      PARALLAX IMAGE GENERATOR

120      AREA OF INTEREST IMAGE EXTRACTING UNIT

1000     IMAGE SIGNAL

1001     AREA OF INTEREST IMAGE SIGNAL

1002     SHAPE INFORMATION

1003     PARALLAX IMAGE SIGNAL

1004     AREA OF INTEREST PARALLAX IMAGE SIGNAL

1005     FIRST CODED DATA

1006     SECOND CODED DATA

1007     THIRD CODED DATA

1008     DEPTH IMAGE SIGNAL

1010    IMAGE SIGNAL

**Claims**

1.  An image display apparatus comprising:

    a parallax image generating means for receiving an image signal of a first viewpoint, an area of interest image signal, and area of interest shape information, the area of interest image signal being an image signal in an area of interest of the image signal of the first viewpoint, changing the area of interest in the image signal of the first viewpoint to an area of interest parallax image signal which is an image of a different viewpoint, to generate an image signal of a second viewpoint; and
    a three-dimensional image display means for performing three-dimensional image display using the image signal of the first viewpoint and the image signal of the second viewpoint.

2.  The image display apparatus according to Claim 1, wherein the area of interest shape information is a signal indicating a position and/or a shape of the area of interest.

3.  The image display apparatus according to Claim 2, wherein the area of interest shape information further comprises a depth image signal indicating a distance between an object in an image and a viewpoint in the area of interest in a three-dimensional space.

4.  The image display apparatus according to Claim 2 or 3, further comprising an area of interest image extracting unit for referring to the image signal of the first viewpoint and the area of interest shape information to generate the area of interest image signal.

5.  The image display apparatus according to Claim 1, further comprising:

    an image decoding means for decoding first coded data to generate the image signal of the first viewpoint;
    an area of interest image decoding means for decoding second coded data to generate the area of interest image signal; and
    an area of interest shape information decoding means for decoding third coded data to generate the area of interest shape information.

6.  The image display apparatus according to Claim 1, further comprising an image converting means for referring to the area of interest image signal to perform signal processing on an input image signal to decrease visibility, to generate the image signal of the first viewpoint.

7.  The image display apparatus according to Claim 6, further comprising:

    an image decoding means for decoding first coded data to generate the input image signal;
    an area of interest image decoding means for decoding second coded data to generate the area of interest image signal; and
    an area of interest shape information decoding means for decoding third coded data to generate the area of interest shape information.

8.  The image display apparatus according to any one of Claims 1 to 7, wherein the parallax image generating means further comprises:

    an area of interest image converting means for referring to the image signal of the first viewpoint and the area of interest shape information to perform conversion processing of the area of interest image signal, to generate the area of interest parallax image signal; and
    an area of interest image combining means for referring to the area of interest shape information to combine the area of interest parallax image signal and the image signal of the first viewpoint, to generate the image signal of the second viewpoint.

9.  The image display apparatus according to Claim 8, wherein the area of interest image converting means refers to a geometric information parameter included in the area of interest shape information to perform geometric conversion that generates an image from a viewpoint that is specified.

**10.** The image display apparatus according to Claim 8, wherein the area of interest image converting means refers to the area of interest image signal and the image signal of the first viewpoint to calculate a gradation conversion parameter based on distribution information regarding gradation of these image signals, to perform gradation conversion on the area of interest image signal according to the gradation conversion parameter.

**11.** The image display apparatus according to Claim 8, wherein the area of interest image converting means refers to the area of interest image signal and the image signal of the first viewpoint to calculate a filtering processing parameter based on distribution information of frequency domains of these image signals, to perform filtering processing that sharpens an image on the area of interest image signal according to the filtering processing parameter.

**12.** The image display apparatus according to Claim 6 or 7,
wherein the image converting means refers to the area of interest image signal and the input image signal to calculate a gradation conversion parameter based on distribution information regarding gradation of these image signals, to perform processing to decrease gradation on the input image signal according to the gradation conversion parameter.

**13.** The image display apparatus according to Claim 6 or 7,
wherein the image converting means refers to the area of interest image signal and the input image signal to calculate a filtering processing parameter based on distribution information of frequency domains of these image signals, to perform filtering processing to decrease sharpness of the image on the input image signal according to the filtering processing parameter.

**14.** An image display method comprising:

receiving an image signal of a first viewpoint, an area of interest image signal, and area of interest shape information, the area of interest image signal being an image signal in an area of interest of the image signal of the first viewpoint, changing the area of interest in the image signal of the first viewpoint to an area of interest parallax image signal which is an image of a different viewpoint, to generate an image signal of a second viewpoint; and
performing three-dimensional image display using the image signal of the first viewpoint and the image signal of the second viewpoint.

**15.** The image display method according to Claim 14, wherein the area of interest shape information is a signal indicating a position and/or a shape of the area of interest.

**16.** The image display method according to Claim 15, wherein the area of interest shape information further comprises a depth image signal indicating a distance between an object in an image and a viewpoint in the area of interest in a three-dimensional space.

**17.** The image display method according to Claim 15 or 16, comprising referring to the image signal of the first viewpoint and the area of interest shape information to generate the area of interest image signal.

**18.** The image display method according to Claim 15, further comprising:

decoding first coded data to generate the image signal of the first viewpoint;
decoding second coded data to generate the area of interest image signal; and
decoding third coded data to decode the area of interest shape information.

**19.** The image display method according to Claim 14, further comprising referring to the area of interest image signal to perform signal processing on an input image signal to decrease visibility, to generate the image signal of the first viewpoint.

**20.** The image display method according to Claim 19, further comprising:

decoding first coded data to generate the input image signal;
decoding second coded data to generate the area of interest image signal; and
decoding third coded data to generate the area of interest shape information.

21. The image display method according to any one of Claims 14 to 20, comprising, when generating the parallax image, referring to the image signal of the first viewpoint and the area of interest shape information to perform conversion processing of the area of interest image signal, to generate the area of interest parallax image signal; and referring to the area of interest shape information to combine the area of interest parallax image signal and the image signal of the first viewpoint, to generate the image signal of the second viewpoint.

22. The image display method according to Claim 21, comprising, when generating the area of interest parallax image signal, referring to a geometric information parameter included in the area of interest shape information to perform geometric conversion that generates an image from a viewpoint that is specified.

23. The image display method according to Claim 21, comprising, when generating the area of interest parallax image signal, referring to the area of interest image signal and the image signal of the first viewpoint to calculate a gradation conversion parameter based on distribution information regarding gradation of these image signals, to perform gradation conversion on the area of interest image signal according to the gradation conversion parameter.

24. The image display method according to Claim 21, comprising, when generating the area of interest parallax image signal, referring to the area of interest image signal and the image signal of the first viewpoint to calculate a filtering processing parameter based on distribution information of frequency domains of these image signals, to perform filtering processing that sharpens an image on the area of interest image signal according to the filtering processing parameter.

25. The image display method according to Claim 19 or 20, comprising, when generating the image signal of the first viewpoint, referring to the area of interest image signal and the input image signal to calculate a gradation conversion parameter based on distribution information regarding gradation of these image signals, to perform processing to decrease gradation on the input image signal according to the gradation conversion parameter.

26. The image display method according to Claim 19 or 20, comprising, when generating the image signal of the first viewpoint, referring to the area of interest image signal and the input image signal to calculate a filtering processing parameter based on distribution information of frequency domains of these image signals, to perform filtering processing to decrease sharpness of the image on the input image signal according to the filtering processing parameter.

27. A non-transitory computer readable medium storing a program of an image display apparatus, the non-transitory computer readable medium causing to execute processing of:

   receiving an image signal of a first viewpoint, an area of interest image signal, and area of interest shape information, the area of interest image signal being an image signal in an area of interest which is a partial area of an image, changing the area of interest in the image signal of the first viewpoint to an area of interest parallax image signal which is an image of a different viewpoint, to generate an image signal of a second viewpoint; and executing three-dimensional image display using the image signal of the first viewpoint and the image signal of the second viewpoint.

28. The non-transitory computer readable medium storing the program of the image display apparatus according to Claim 27, wherein the area of interest shape information is a signal indicating a position and/or a shape of the area of interest.

29. The non-transitory computer readable medium storing the program of the image display apparatus according to Claim 28, wherein the area of interest shape information further comprises a depth image signal indicating a distance between an object in an image and a viewpoint in the area of interest in a three-dimensional space.

30. The non-transitory computer readable medium storing the program of the image display apparatus according to Claim 28 or 29, the non-transitory computer readable medium causing to refer to the image signal of the first viewpoint and the area of interest shape information to generate the area of interest image signal.

31. The non-transitory computer readable medium storing the program of the image display apparatus according to Claim 27, the non-transitory computer readable medium causing to execute processing of:

   image decoding processing for decoding first coded data to generate the image signal of the first viewpoint; area of interest image decoding processing for decoding second coded data to generate the area of interest image signal; and
area of interest shape information decoding processing for decoding third coded data to generate the area of interest shape information.

32. The non-transitory computer readable medium storing the program of the image display apparatus according to Claim 27, the non-transitory computer readable medium causing to refer to the area of interest image signal to perform signal processing on an input image signal to decrease visibility, to generate the image signal of the first viewpoint.

33. The non-transitory computer readable medium storing the program of the image display apparatus according to Claim 32, the non-transitory computer readable medium further causing to execute processing of:

decoding first coded data to generate the input image signal;
decoding second coded data to generate the area of interest image signal; and
decoding third coded data to generate the area of interest shape information.

34. The non-transitory computer readable medium storing the program of the image display apparatus according to any one of Claims 27 to 33, wherein the processing of generating the image signal of the second viewpoint executes:

processing of referring to the image signal of the first viewpoint and the area of interest shape information to perform conversion processing of the area of interest image signal, to generate the area of interest parallax image signal; and
processing of referring to the area of interest shape information to combine the area of interest parallax image signal and the image signal of the first viewpoint, to generate the image signal of the second viewpoint.

35. An image display apparatus comprising:

means for combining a first image signal that receives and a second image signal to obtain a third image signal, the second image signal being an image signal in an area of interest of the first image signal and having parallax; and
means for performing stereoscopic display using the third video signal and the first video signal.

36. The image display apparatus according to Claim 35, further comprising means for referring to the second image signal to perform conversion processing for decreasing visibility of a fourth image signal, to generate the first image signal.

37. An image generation apparatus that generates:

an image signal of a first viewpoint;
an area of interest image signal which is an image signal in an area of interest of the image signal of the first viewpoint; and
area of interest shape information.

38. The image generation apparatus according to Claim 37,
wherein the area of interest shape information is a signal indicating a position and/or a shape of the area of interest.

39. The image generation apparatus according to Claim 38,
wherein the area of interest shape information further comprises a depth image signal indicating a distance between an object in an image and a viewpoint in the area of interest in a three-dimensional space.

40. The image generation apparatus according to any one of Claims 37 to 39,
comprising:

an image coding means for coding the image signal of the first viewpoint to generate first coded data;
an area of interest image coding means for coding the area of interest image signal to generate second coded data; and
an area of interest shape information coding means for coding the area of interest shape information to generate third coded data.

**41.** An image display method comprising:

combining a first image signal that receives and a second image signal to generate a third image signal, the second image signal being an image signal in an area of interest of the first image signal and having parallax; and performing stereoscopic display using the third image signal and the first image signal.

**42.** The image display method according to Claim 41, comprising referring to the second image signal to perform conversion processing for decreasing visibility of a fourth image signal, to generate the first image signal.

**43.** An image generation method that generates:

an image signal of a first viewpoint;
an area of interest images signal which is an image signal in the area of interest; and
area of interest shape information.

**44.** The image generation method according to Claim 43,
wherein the area of interest shape information is a signal indicating a position and/or a shape of the area of interest.

**45.** The image generation method according to Claim 44,
wherein the area of interest shape information further comprises a depth image signal indicating a distance between an object in an image and a viewpoint in the area of interest in a three-dimensional space.

**46.** The image generation method according to any one of Claims 43 to 45, comprising:

coding the image signal of the first viewpoint to generate first coded data;
coding the area of interest image signal to generate second coded data; and
coding the area of interest shape information to generate third coded data.

**47.** A non-transitory computer readable medium storing a program of an image display apparatus, the non-transitory computer readable medium causing to execute processing of:

combining a first image signal that receives and a second image signal to generate a third image signal, the second image signal being an image signal in an area of interest of the first image signal and having parallax; and performing stereoscopic display using the third image signal and the first image signal.

**48.** The non-transitory computer readable medium storing the program of the image display apparatus according to Claim 47, the non-transitory computer readable medium causing to refer to the second image signal to perform conversion processing for decreasing visibility of a fourth image signal, to generate the first image signal.

**49.** A non-transitory computer readable medium storing a program of an image generation apparatus, the non-transitory computer readable medium causing to execute processing of generating:

an image signal of a first viewpoint;
an area of interest image signal which is an image signal in the area of interest; and
area of interest shape information,

**50.** The non-transitory computer readable medium storing the program of the image generation apparatus according to Claim 49, wherein the area of interest shape information is a signal indicating a position and/or a shape of the area of interest.

**51.** The non-transitory computer readable medium storing the program of the image generation apparatus according to Claim 50, wherein the area of interest shape information further comprises a depth image signal indicating a distance between an object in an image and a viewpoint in the area of interest in a three-dimensional space.

**52.** The non-transitory computer readable medium storing the program of the image generation apparatus according to any one of Claims 49 to 51, the non-transitory computer readable medium causing to execute processing of:

coding the image signal of the first viewpoint to generate first coded data;

coding the area of interest image signal to generate second coded data; and
coding the area of interest shape information to generate third coded data.

Fig. 1

101

1002

1001

103

AREA OF
INTEREST IMAGE
CONVERTER

1004

AREA OF
INTEREST IMAGE
COMBINING UNIT

104

1003

1000

Fig. 2

101

1002

1001

103

AREA OF
INTEREST IMAGE
CONVERTER

1004

AREA OF
INTEREST IMAGE
COMBINING UNIT

104

1003

1000

Fig. 3

Fig. 4

Fig. 5

EP 2 416 583 A1

Fig. 6

Fig. 7

Fig. 8

## INTERNATIONAL SEARCH REPORT

| International application No. |
| --- |
| PCT/JP2010/001798 |

A. CLASSIFICATION OF SUBJECT MATTER
*H04N13/04*(2006.01)i, *G06T1/00*(2006.01)i, *H04N7/26*(2006.01)i

According to International Patent Classification (IPC) or to both national classification and IPC

B. FIELDS SEARCHED

Minimum documentation searched (classification system followed by classification symbols)
H04N13/00-15/00, G06T1/00, H04N7/26-7/68

Documentation searched other than minimum documentation to the extent that such documents are included in the fields searched

| Jitsuyo Shinan Koho | 1922-1996 | Jitsuyo Shinan Toroku Koho | 1996-2010 |
| Kokai Jitsuyo Shinan Koho | 1971-2010 | Toroku Jitsuyo Shinan Koho | 1994-2010 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
| --- | --- | --- |
| X | JP 2006-129248 A (Sanyo Electric Co., Ltd.), 18 May 2006 (18.05.2006), claims 1 to 9; paragraphs [0007] to [0022], [0030] to [0067]; fig. 1 to 5 | 37-38,40, 43-44,46, 49-50,52 |
| A | claims 1 to 9; paragraphs [0007] to [0022], [0030] to [0067]; fig. 1 to 5 & WO 2006/046550 A1 & US 2009/0208122 A1 | 1-36,39, 41-42,45, 47-48,51 |
| X | JP 2006-340027 A (Takehisa MATSUSHITA), 14 December 2006 (14.12.2006), paragraphs [0004] to [0012]; fig. 1 to 3 | 41-42,47-48 |
| A | paragraphs [0004] to [0012]; fig. 1 to 3 (Family: none) | 1-40,43-46, 49-52 |

☒ Further documents are listed in the continuation of Box C.      ☐ See patent family annex.

| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| 03 June, 2010 (03.06.10) | 15 June, 2010 (15.06.10) |

| Name and mailing address of the ISA/ | Authorized officer |
| --- | --- |
| Japanese Patent Office | |
| Facsimile No. | Telephone No. |

Form PCT/ISA/210 (second sheet) (July 2009)

**INTERNATIONAL SEARCH REPORT**

International application No.

PCT/JP2010/001798

C (Continuation).   DOCUMENTS CONSIDERED TO BE RELEVANT

| Category* | Citation of document, with indication, where appropriate, of the relevant passages | Relevant to claim No. |
|---|---|---|
| A | JP 7-250352 A  (Nippon Hoso Kyokai),<br>26 September 1995 (26.09.1995),<br>paragraphs [0008] to [0011], [0020] to [0042];<br>fig. 1 to 3<br>(Family: none) | 1-52 |
| A | JP 2008-160382 A  (Fujifilm Corp.),<br>10 July 2008 (10.07.2008),<br>abstract; paragraphs [0006], [0013], [0064]<br>to [0076]; fig. 24 to 35<br>& US 2008/0151044 A1 | 1-52 |
| A | JP 2002-183759 A  (Toshiba Corp.),<br>28 June 2002 (28.06.2002),<br>paragraphs [0045] to [0049]; fig. 2 to 3<br>(Family: none) | 1-52 |

Form PCT/ISA/210 (continuation of second sheet) (July 2009)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 11155154 A
- JP 2009081969 A